# EUROPÄISCHE PATENTSCHRIFT

(11) **EP 0 508 277 B1**
(45) Veröffentlichungstag und Bekanntmachung des Hinweises auf die Patenterteilung: **25.09.1996**
(21) Anmeldenummer: 92105522.4
(22) Anmeldetag: 31.03.1992
(51) Int. Cl.: B29C 45/68, B29C 45/50

(54) **Verschiebe- und/oder Stellkraft-Antriebsvorrichtung für Spritzgiessmaschinen**
Drive apparatus for the displacement and/or the positioning force for injection moulding machines
Dispositif d'entraînement pour le déplacement et/ou la force de positionnement pour machines à mouler par injection

(30) Priorität: 10.04.1991 DE 4111594
(43) Veröffentlichungstag der Anmeldung: 14.10.1992
(73) Patentinhaber: Battenfeld GmbH, D-58540 Meinerzhagen (DE)
(72) Erfinder: Miese, Manfred Dr., 7505 Ettlingen 1 (DE); Holzschuh, Johann, 5882 Meinerzhagen (DE)
(74) Vertreter: Müller, Gerd, Dipl.-Ing.

(56) Entgegenhaltungen:
- DE-A- 1 458 215
- DE-A- 1 479 236
- DE-B- 1 554 988
- DE-C- 663 217
- FR-A- 1 404 585
- US-A- 3 191 235
- PATENT ABSTRACTS OF JAPAN vol. 12, no. 27 (M-662)(2874) 27. Januar 1988 & JP-A-62 183 321 (MITSUBISHI CABLE)
- PATENT ABSTRACTS OF JAPAN vol. 10, no. 118 (M-475)(2175) 2. Mai 1986 & JP-A-60 247 495 (MITSUBISHI DENKI)

## Beschreibung

Die Erfindung betrifft
a) eine Verschiebe- und/oder Stellkraft-Antriebsvorrichtung für Spritzgießmaschinen, insbesondere zur Betätigung der Schubschnecke eines Plastifizierextruders oder der Schließeinheit für eine Spritzgießform,
b) bei welcher ein Hydraulik-Hubantrieb mit einem mechanischen Hubspindelsystem in Hintereinander-, Reihen- oder Serienanordnung vorgesehen und als Hubspindelantrieb ein Elektromotor vorgesehen ist,
c) bei welcher von dem Hubspindelsystem und dem Hydraulik-Hubantrieb zumindest das Hubspindelsystem ein längs einer Gradführung bewegbares Joch antreibt,
d) und bei welcher der Hydraulik-Hubantrieb innerhalb des Joches untergebracht und aus einer relativ kurzhubigen Kolben-Zylinder-Einheit besteht.

Beim Betrieb von Spritzgießmaschinen ist es oft nötig, an ein und derselben Vorrichtung zu verschiedenen Zeiten, bspw. nacheinander, Stellbewegungen auszuführen und Kraftwirkungen hervorzubringen. Während dabei die Stellbewegungen über mehr oder weniger große Wegstrecken hinweg stattfinden, sollen bei der Aufbringung der Kraftwirkungen praktisch keine oder nur geringe Wegstrecken überwunden werden müssen.

Beim Betrieb von Spritzgießmaschinen treten derartig unterschiedliche Forderungen bspw. in Verbindung mit der Schubschneckeneinheit von Extrudern auf, wenn zunächst durch Verschieben der Schubschnecke die plastifizierte Kunststoffschmelze in eine Spritzgießform dosiert wird und diese dann anschließend einem sogenannten Nachdruck ausgesetzt wird.

Ähnliche Anforderungen stellen sich aber auch beim Betrieb der Schließeinheit für die Spritzgießform, wo die beiden Formhälften zum Schließen aufeinander zu und zum Öffnen voneinander weg bewegbar sind, wobei die in ihrer Schließstellung befindliche Spritzgießform einer bestimmten Schließkraft unterworfen werden muß.

Durch die US-A 3 191 235 ist eine Verschiebe- und/oder Stellkraft-Antriebsvorrichtung für Spritzgießmaschinen der eingangs angegebenen Bauart zum Betrieb der Schließeinheit für eine Spritzgießform bereits bekannt. Bei ihr arbeitet jedoch das längs der Geradführung bewegbare Joch mit mehreren über seinen maximalen Stellweg hinweg verteilt angeordneten Endschaltern zusammen, welche durch ihr Ansprechen einerseits den Antrieb des Hubspindelsystems und andererseits den Hydraulik-Hubantrieb beeinflussen, und zwar den letzteren über ein Zeitrelais, welches lediglich die Zeitdauer der durch den Hydraulik-Hubantrieb vorgehaltenen Schließkraft bestimmt.

Nachteilig ist hierbei, daß beim Schließvorgang der Schließeinheit der Hydraulik-Hubantrieb schon während der Auslauf- oder Überlaufphase des Hubspindelsystems gestartet wird. In der Praxis hat diese Arbeitsweise der bekannten Schiebe- und/oder Stellkraft-Antriebsvorrichtung aber unweigerlich unregelmäßige Schließvorgänge zur Folge, weil dort einerseits nur ein elektrisch betätigtes Wegeventil benutzt wird, welches lediglich eine Bewegungsrichtung steuern kann, und weil dieses Wegeventil andererseits nur durch mehrere (vier) verschiedene Schalter beeinflußt werden kann.

Die DE-B 15 54 988 betrifft eine Spritzgußpresse mit einer mit mechanischen Mitteln lotrecht verschiebbaren Formhälfte, die in der Schließstellung hydraulisch verriegelbar ist. Durch Einstellung an einem Druckregelventil wird dort die jeweilige Wahl der Größe der hydraulischen Kraft vorgenommen, und zwar in Abwägigkeit von den gegebenen Betriebsbedingungen bzw. Verhältnissen der Spritzgußpresse. Ein dort zusätzlich vorgesehener Endschalter löst in der hochgefahrenen Endstellung der beweglichen Formhälfte lediglich ein Signal aus, welches auf ein Steuerglied wirkt, mittels dessen die Arbeitsmittel-Zufuhr für den Hydraulik-Hubantrieb auf neutralen Umlauf schaltet.

Schließlich betrifft auch die JP-A 60 247 495 eine Verschiebe- und/oder Stellkraft-Antriebsvorrichtung, die mit der Schließeinheit für eine Spritzgießform einer Spritzgießmaschine zusammenarbeitet. Hieraus geht lediglich hervor, daß der Hydraulik-Hubantrieb mit einer Hydraulikpumpe zusammenwirkt, deren Arbeitsweise von einer Steuerung beeinflußt wird.

Ziel der Erfindung ist es, mit relativ geringem Aufwand die Arbeitsweise einer gattungsgemäßen Verschiebe- und/oder Stellkraft-Antriebsvorrichtung für Spritzgießmaschinen zu optimieren.

Gelöst wird diese Aufgabe erfindungsgemäß mit den Kennzeichnungsmerkmalen des Anspruchs 1, und zwar durch
e) einen den jeweiligen Schließdruck der auf die Spritzgießform-Hälften wirkenden Schließkraft bzw. einen den Innendruck der Spritzgießform beeinflußbaren Druckregelkreis, in dem ein Servoventil zur Ansteuerung des Hydraulik-Hubantriebs und somit zur Einstellung der Schließkraft bzw. des Innendrucks liegt,
f) und dadurch, daß der Elektromotor des Hubspindelsystems von einem Positionierregler beeinflußt ist,
g) welcher auf verschiedene Stellungen des Joches relativ zur Geradführung anspricht.

Das Wesen der Erfindung liegt also im Einsatz eines Hybridsystems, dessen elektromechanische Verschiebe-Antriebsvorrichtung schnell und sicher relativ große Stellwege überwindet und dessen Stellkraft-Antriebsvorrichtung die Nachdruck- und/oder Schließkräfte vorhält.

Die mit dem erfindungsgemäßen Hubspindelsystem erzeugbaren Kräfte können in ihrer Größe präzise bestimmt, aber auch stufenlos variiert werden. Vorteilhaft ist dabei aber auch, daß die jeweils vorgegebenen Stellwege immer exakt durchlaufen werden können.

Zweckmäßigerweise sieht die Erfindung nach Anspruch 2 vor, daß der Hydraulik-Hubantrieb aus einer doppelt wirkenden Kolben-Zylinder-Einheit besteht.

Andererseits soll nach Anspruch 3 der Elektromotor als bürstenloser Drehstrom-Servomotor ausgelegt werden.

Im Rahmen der Erfindung kann nach Anspruch 4 das Joch die bewegliche Formaufspannplatte einer Schließeinheit bilden und den Zylinder der Kolben-Zylinder-Einheit enthalten, während die Spindel des Hubspindelsystems am Kolben der Kolben-Zylinder-Einheit angreifen.

Das Joch kann gemäß Anspruch 5 aber auch ein Zwischenglied zwischen der Schubschnecke eines Extruders und der Spindel des Hubspindelsystems bilden und den Zylinder der Kolben-Zylinder-Einheit enthalten, wobei die Spindel z. B. am Joch angreift, während der Kolben mit der Schubschnecke des Extruders gekuppelt ist.

In schematisch vereinfachter Prinzipdarstellung stellt die Zeichnung Ausführungsbeispiele des Gegenstandes der Erfindung dar. Es zeigen hierbei
- Figur 1: eine Schließeinheit für eine Spritzgießform mit zugehöriger Verschiebe- und/oder Stellkraft-Antriebsvorrichtung, und
- Figur 2: eine Schubschneckeneinheit eines Extruders mit zugehöriger Verschiebe- und/oder Stellkraft-Antriebsvorrichtung.

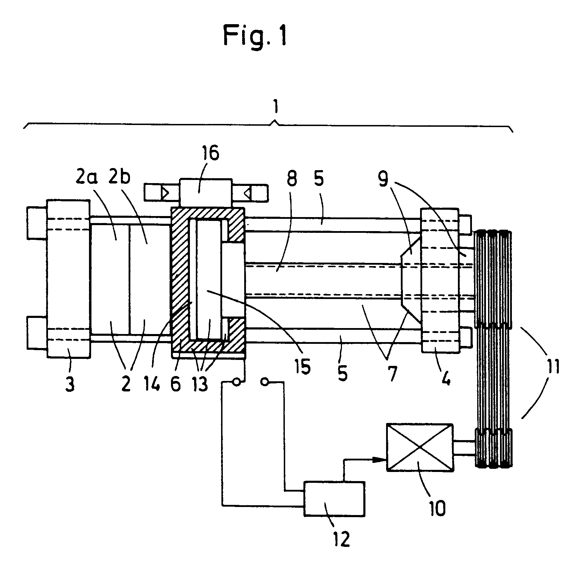

In Fig. 1 der Zeichnung ist eine Schließeinheit 1 üblicher Bauart für eine Spritzgießform 2 dargestellt, wie sie einer Spritzgießmaschine zugeordnet bzw. im Bereich einer solchen eingebaut wird.

Zwischen zwei Endplatten 3 und 4 sind parallele Führungsholme eingebaut, auf denen ein Joch 6 verschiebbar gehalten und ausgerichtet ist.

Die Endplatte 3 bildet die ortsfeste Aufspannplatte für die eine Hälfte 2a der Spritzgießform 2, während das Joch 6 als bewegliche Aufspannplatte für die andere Hälfte 2b der Spritzgießform 2 fungiert. Durch Verschiebung des Joches 6 auf den Führungsholmen 5 der Schließeinheit 1 relativ zur Endplatte 3 läßt sich die Spritzgießform 2 durch Auseinanderfahren ihrer beiden Hälften 2a und 2b öffnen, während sie durch Zusammenfahren derselben wieder geschlossen wird.

Das Verschieben des Joches 6 auf den Führungsholmen 5 der Schließeinheit 1 wird durch ein Hubspindelsystem 7 bewirkt, das aus einer am Joch 6 angreifenden Gewindespindel 8 und einer in der Endplatte 4 ausschließlich drehbar gelagerten Spindelmutter 9 besteht. Der Drehantrieb der Spindelmutter 9 erfolgt von einem Elektromotor 10 aus, bspw. über ein Riemenvorgelege 11, wobei der Elektromotor 10 vorzugsweise als bürstenloser Drehstrom-Servomotor ausgelegt ist. Der Elektromotor 10 wird vorzugsweise von einem Positionierregler 12 beeinflußt, welcher wiederum auf die verschiedenen Stellungen des Joches 6 relativ zur Endplatte 3 bzw. auf die Öffnungs- und Schließstellung der beiden Formhälften 2a und 2b der Spritzgießform 2 anspricht, um einen präzisen und zugleich wirtschaftlichen Betrieb der Schließeinheit 1 zu ermöglichen.

In Hintereinander-, Reihen- oder Serienanordnung zum Hubspindelsystems 7 ist ein Hydraulik-Hubantrieb 13 vorgesehen, der aus einer doppelt wirkenden, vorzugsweise relativ kurzhubigen, Kolben-Zylinder-Einheit besteht. Der Zylinder 14 des Hydraulik-Hubantriebs ist dabei im Joch 6 bzw. in der hiervon gebildeten beweglichen Formaufspannplatte der Schließeinheit 1 untergebracht, während deren Kolben 15 an der Gewindespindel 8 des Hubspindelsystems 7 angreift.

Zur Ansteuerung des Hydraulik-Hubantriebs 13 dient ein Servoventil 16, das in einem Druckregelkreis liegt, der vom jeweiligen Schließdruck zwischen den beiden Hälften 2a und 2b der Spritzgießform 2 beeinflußt wird. Über das Servoventil 16 sowie den Hydraulik-Hubantrieb 13 läßt sich damit die Schließkraft der Schließeinheit 1 präzise und stufenlos auf die jeweiligen Bedürfnisse einstellen, nachdem zuvor die Spritzgießform 2 mit Hilfe des Hubspindelsystems 7 in ihre Schließstellung gebracht worden ist.

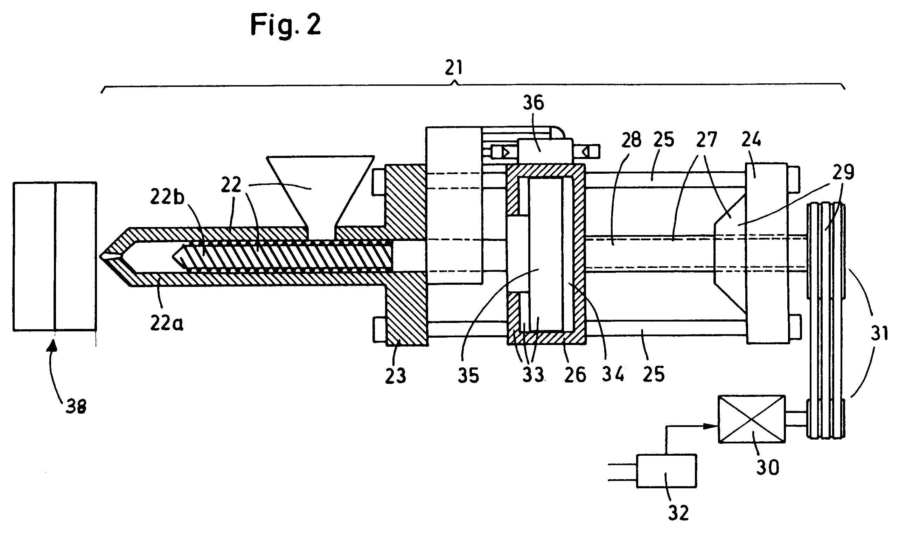

In Fig. 2 der Zeichnung ist zu sehen, daß der schon aus Fig. 1 erkennbare Grundaufbau einer Verschiebe- und/oder Antriebsvorrichtung praktisch ohne wesentliche Änderung auch für den Betrieb der Schubschneckeneinheit 21 eines Plastifizierextruders 22 eingesetzt werden kann.

In üblicher Weise besteht dabei der Plastifizierextruder 22 aus dem Schneckenzylinder 22a und der eigentlichen Schubschnecke 22 b, die sowohl drehantreibbar als auch axial verschiebbar angeordnet ist.

Zwischen zwei Endplatten 23 und 24 sind auch hier mehrere parallele Führungsholme 25 für ein verschiebbares Joch 26 vorhanden. Die Bewegung des Joches 26 längs der Führungsholme 5 wird über ein Hubspindelsystem 27 bewirkt, das eine oder mehrere am Joch 26 angreifende Gewindespindeln 28 und eine oder mehrere in der Endplatte 24 drehbar gelagerte Spindelmuttern 29 umfaßt. Die Spindelmutter 29 ist dabei vom Elektromotor 30 aus über ein Riemenvorgelege 31 drehantreibbar. Dies in der Weise, daß der als bürstenloser Drehstrom-Servomotor ausgelegte Elektromotor 30 durch eine Positionierregelung 32 beeinflußbar ist, die wiederum in einem Abhängigkeitsverhältnis zur Verschiebestellung des Joches 26 steht.

In das Joch 26 ist der Hydraulik-Hubantrieb 33 integriert, der aus einer Kolben-Zylinder-Einheit besteht. Der Zylinder 34 des Hydraulik-Hubantriebs 33 ist im Joch 26 untergebracht, während sein Kolben 35 über eine Kolbenstange 37 am hinteren Ende der Schubschnecke 22b angreift. Die doppelt wirkende Kolben-Zylinder-Einheit des Hydraulik-Hubantriebs 33 ist über ein Servoventil 36 beeinflußbar, welches in einem Druckregelkreis liegt, der wiederum vom Innendruck in einer Spritzgießform 38 beeinflußt wird, wenn deren Formhohlraum vom Plastifizierextruder 22 aus mit Kunststoffschmelze beschickt ist.

Zur Beschickung der Spritzgießform 38 mit plastifizierter Kunststoffschmelze wird zunächst nur das Hubspindelsystem 27 betätigt, damit über das Joch 26 die Schubschnecke 22b im Schneckenzylinder 22a vorgeschoben wird. Erst nachdem der Formhohlraum der Spritzgießform 38 mit der thermoplastischen Kunststoffschmelze ausgefüllt ist, wird der Hydraulik-Hubantrieb 33 beaufschlagt, um auf diese Art und Weise über den Kolben 35 und die Kolbenstange 37 auf die Schubschnecke 22b einzuwirken, und zwar mit der Folge, daß auf die Kunststoffschmelze innerhalb der Spritzgießform 38 ein sogenannter Nachdruck zur Einwirkung gelangt.

## Patentansprüche

1. a) Verschiebe- und/oder Stellkraft-Antriebsvorrichtung für Spritzgießmaschinen, insbesondere zur Betätigung der Schubschnecke (22b) eines Plastifizierextruders (22) oder der Schließeinheit (1) für eine Spritzgießform (2),
b) bei welcher ein Hydraulik-Hubantrieb (13 bzw. 33) mit einem mechanischen Hubspindelsystem (7 bzw. 27) in Hintereinander-, Reihen- oder Serienanordnung vorgesehen und als Hubspindelantrieb ein Elektromotor (10 bzw. 30) vorgesehen ist,
c) bei welcher von dem Hubspindelsystem (7 bzw. 27) und dem Hydraulik-Hubantrieb (13 bzw. 33) zumindest das Hubspindelsystem (7 bzw. 27) ein längs einer geraden Führung (5 bzw. 25) bewegbares Joch (6 bzw. 26) antreibt,
d) und bei welcher der Hydraulik-Hubantrieb (13 bzw. 33) innerhalb des Joches (6 bzw. 26) untergebraucht ist und aus einer relativ kurzhubigen Kolben-Zylinder-Einheit (14, 15 bzw. 34, 35) steht,
**gekennzeichnet durch,**
e) einen den jeweiligen Schließdruck der auf die Spritzgießform-Hälften (2a, 2b) wirkenden Schließkraft bzw. einen den Innendruck der Spritzgießform (38) beeinflußbaren Druckregelkreis, in dem ein Servoventil (26 bzw. 36) zur Ansteuerung des Hydraulik-Hubantriebs (13 bzw. 33) und somit zur Einstellung der Schließkraft bzw. des Innendrucks liegt,
f) und dadurch, daß der Elektromotor (10 bzw. 30) des Hubspindelsystems (7 bzw. 27) von einem Positionierregler (12 bzw. 32) beeinflußt ist,
g) welcher auf verschiedene Stellungen des Joches (6 bzw. 26) relativ zur Geradführung (5 bzw. 25) anspricht.

2. Antriebsvorrichtung nach Anspruch 1,
**dadurch gekennzeichnet,**
daß der Hydraulik-Hubantrieb (13 bzw. 33) aus einer doppelt wirkenden Kolben-Zylinder-Einheit (14, 15 bzw. 34, 35) besteht.

3. Antriebsvorrichtung nach Anspruch 1,
**dadurch gekennzeichnet,**
daß der Elektromotor (10 bzw. 30) als ein bürstenloser Drehstrom-Servomotor ausgelegt ist.

4. Antriebsvorrichtung nach Anspruch 1,
**dadurch gekennzeichnet,**
daß das Joch (6) die bewegliche Formaufspannplatte einer Schließeinheit (1) bildet und den Zylinder (14) der Kolben-Zylinder-Einheit (14, 15) enthält, während die Spindel (8) des Hubspindelsystems (7) am Kolben (15) der Kolben-Zylinder-Einheit (14, 15) angreift.

5. Antriebsvorrichtung nach Anspruch 1,
**dadurch gekennzeichnet,**
daß das Joch (26) ein Zwischenglied zwischen der Schubschnecke (22b) eines Plastifizierextruders (22) und der Spindel (28) des Hubspindelsystems (7) bildet und den Zylinder (34) der Kolben-Zylinder-Einheit (34, 35) enthält, wobei die Spindel (28) z.B. am Joch (26) angreift, während der Kolben (35) mit der Schubschnecke (22b) des Plastifizier-Extruders (22) gekuppelt ist (37).

## Claims

1. a) Displacing force and/or setting force drive device for injection moulding machines, especially for the actuation of the advance worm (22b) of a plasticising extruder (22) or of the closing unit (1) for an injection moulding mould (2),
b) in which a hydraulic stroke drive (13 or 33) is provided with a mechanical stroke spindle system (7 or 27) in an arrangement of one behind the other, of a row or of a series and an electric motor (10 or 3a) is provided as the stroke spindle drive,
c) in which, of the stroke spindle system (7 or 27) and the hydraulic stroke drive (13 or 33), at least the stroke spindle system (7 or 27) drives a yoke (6 or 26) movable longitudinally of a straight guide (5 or 25),
d) and in which the hydraulic stroke unit (13 o4 33) is accommodated within the yoke (6 or 26) and consists of a relatively short-stroke piston-cylinder unit (14, 15 or 34, 35),
characterised by
e) a pressure regulating circuit which is able to influence the respective closing pressure of the closing force acting on the injection moulding mould halves (2a, 2b) or to influence the internal pressure of the injection moulding mould (38) and in which there is a servo valve (26 or 36) for the control of the hydraulic stroke drive (13 or 33) and thus for the setting of the closing force or of the internal pressure,
f) and characaterised thereby that the electric motor (10 or 30) of the stroke spindle system (7 or 27) is influenced by a position regulator (12 or 32),
g) which responds to different settings of the yoke (6 or 26) relative to the straight guide (5 or 25).

2. Drive device according to claim 1, characterised thereby that the hydraulic stroke unit (13 or 33) consists of a double-acting piston-cylinder unit (14, 15 or 34, 35).

3. Drive device according to claim 1, characterised thereby that the electric motor (10 or 30) is designed as a brushless polyphase servo motor.

4. Drive device according to claim 1, characterised thereby that the yoke (6) forms the movable clamping plate of a closing unit (1) and contains the cylinder (14) of the piston-cylinder unit (14, 15), whilst the spindle (8) of the stroke spindle system (7) engages at the piston (15) of the piston-cylinder unit (14, 15).

5. Drive device according to claim 1, characterised thereby that the yoke (26) forms an intermediate member between the advance worm (22b) of a plasticising extruder (22) and the spindle (28) of the stroke spindle system (7) and contains the cylinder (34) of the piston-cylinder unit (34, 35), wherein the spindle (28) engages at, for example, the yoke (26), whilst the piston (35) is coupled (37) with the advance worm (22b) of the plasticising extruder (22).

## Revendications

1. a) Dispositif d'entraînement pour le déplacement et/ou le positionnement, pour machines de moulage par injection, notamment pour l'actionnement de la vis-poussoir (22b) d'une extrudeuse préplastificatrice (22) ou de l'unité de fermeture (1) du moule d'injection (2),
b) qui comporte un dispositif d'avancement hydraulique (13 ou 33) comportant un ensemble mécanique à broche d'avancement (7 ou 27) dans un agencement successif, aligné ou en série et un moteur électrique (70 ou 30) pour l'entraînement de la broche d'avancement,
c) dans lequel au moins l'ensemble à broche d'avancement (7 ou 27), choisi parmi ledit ensemble à broche (7 ou 27) et le dispositif d'avancement hydraulique (13 ou 33), entraîne une culasse (6 ou 26) déplaçable le long d'un guide droit (5 ou 25), et
d) dans lequel le dispositif d'avancement hydraulique (13 ou 33) est agence à l'intérieur de la culasse (6 ou 26) et consiste en une unité à piston et cylindre (14, 15 ou 34, 35) ayant une course relativement courte,
caractérisé par
e) un circuit de régulation de pression qui est apte à agir sur la pression de fermeture de la force de fermeture des parties de moule (2a, 2b) ou sur la pression intérieure du moule d'injection (38), et qui comporte une vanne servo-commandée (26 ou 36) pour la commande du dispositif d'avancement hydraulique (13 ou 33) et, de ce fait, pour le réglage de la force de fermeture ou de la pression intérieure,
f) et par le fait que le moteur électrique (10 ou 30) de l'ensemble à broche d'avancement (7 ou 27) est commandé par un palpeur de positionnement (12 ou 32)
g) qui réagit sur diverses positions de la culasse (6 ou 26) par rapport au guide droit (5 ou 25).

2. Dispositif d'entraînement selon la revendication 1, caractérisé en ce que le dispositif d'avancement hydraulique (13 ou 33) consiste en une unité à piston et cylindre à double effet (14, 15 ou 34, 35)

3. Dispositif d'entraînement selon la revendication 1, caractérisé en ce que le moteur électrique (10 ou 30) consiste en un servomoteur à courant alternatif exempt de balai.

4. Dispositif d'entraînement selon la revendication 1, caractérisé en ce que la culasse (6) constitue la plaque de serrage de moule d'une unité de fermeture (1) et contient le cylindre (14) de l'unité à piston et cylindre (14, 15), tandisque la broche (8) de l'ensemble à broche d'avancement (7) est en interaction avec le piston (15) de l'unité à piston et cylindre (14, 15).

5. Dispositif d'entraînement selon la revendication 1, caractérisé en ce que la culasse (26) constitue un élément intermédiaire entre la vis-poussoir (22b) d'une extrudeuse préplastificatrice (22) et la broche (28) de l'ensemble à broche d'avancement (7), et comporte le cylindre (34) de l'unité à piston et cylindre (34, 35), la broche (28) agissant par exemple sur la culasse (26), tandisque le piston (35) est couplé (37) à la vis-poussoir (22b) de l'extrudeuse préplastificatrice (22).
